(19) Europäisches Patentamt
European Patent Office
Office européen des brevets

(11) **EP 2 659 495 B1**

(12) **FASCICULE DE BREVET EUROPEEN**

(45) Date de publication et mention de la délivrance du brevet:
**18.09.2019 Bulletin 2019/38**

(21) Numéro de dépôt: **11802756.4**

(22) Date de dépôt: **27.12.2011**

(51) Int Cl.:
*H01F 27/40* *(2006.01)*     *H01F 29/14* *(2006.01)*
*H02M 7/06* *(2006.01)*     *H01F 27/28* *(2006.01)*

(86) Numéro de dépôt international:
**PCT/EP2011/074064**

(87) Numéro de publication internationale:
**WO 2012/089717 (05.07.2012 Gazette 2012/27)**

(54) **TRANSFORMATEUR DE REDRESSEUR**

TRANSFORMATOR-GLEICHRICHTER-EINHEIT

TRANSFORMER-RECTIFIER UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2010 FR 1061378**

(43) Date de publication de la demande:
**06.11.2013 Bulletin 2013/45**

(73) Titulaire: **General Electric Technology GmbH 5400 Baden (CH)**

(72) Inventeurs:
• **TIRILLY, Serge 91300 Massy (FR)**
• **NGNEGUEU, Triomphant 92310 Sevres (FR)**
• **MARNAY, David 91400 Orsay (FR)**

(74) Mandataire: **Brevalex 95, rue d'Amsterdam 75378 Paris Cedex 8 (FR)**

(56) Documents cités:
**EP-A1- 0 053 691     US-A- 2 918 616
US-A- 3 085 188     US-A- 3 173 061**

## Description

## DOMAINE TECHNIQUE

La présente invention concerne un transformateur de redresseur pour circuit redresseur de forte puissance utilisable notamment pour alimenter en courant continu des charges telles que par exemple des lignes de cuves d'électrolyse d'aluminium. A titre indicatif, les cuves dans lesquelles se fait l'électrolyse de l'aluminium sont traversées par un courant continu de très forte intensité de l'ordre de 350 000 ampères pour une tension de 4 volts, de nombreuses cuves étant alimentées en série. Le circuit redresseur à forte puissance pourrait bien sûr être utilisé pour alimenter d'autres charges que des cuves d'électrolyse, par exemple des fours électriques à arc ou des générateurs de plasma qui nécessitent aussi des fortes puissances. A titre d'exemple, pour une usine d'électrolyse disposant de 200 cuves montées en série, alimentées par un courant de 300 000 ampères sous une tension de 4 volts, soit 800 volts pour la série d'électrolyse, il faut disposer d'une puissance de 250 MW. L'usine doit disposer en final d'une puissance de 300 MW, si on ajoute les auxiliaires notamment la cuisson des anodes et la fonderie. Cette puissance correspond à environ un tiers de la puissance produite par une tranche de centrale nucléaire, ce qui est énorme.

## ÉTAT DE LA TECHNIQUE ANTÉRIEURE

On rappelle qu'un transformateur comporte au moins deux enroulements dont au moins un primaire et au moins un secondaire, ces enroulements pouvant être montés par exemple en triangle ou en étoile s'ils sont triphasés. Dans cette application le primaire du transformateur est destiné à être relié au réseau électrique généralement par l'intermédiaire d'un transformateur de réglage. Le secondaire du transformateur est destiné à être relié à un redresseur de type pont de Graetz à semi-conducteurs par l'intermédiaire de transducteurs magnétiques (transductors en anglais) encore appelés réactances saturables (saturable reactors en anglais). Dans ce contexte, les transducteurs magnétiques sont des dispositifs à l'aide desquels on peut faire varier la tension continue en sortie du redresseur par l'intermédiaire d'un courant indépendant, en utilisant les phénomènes de saturation du circuit magnétique. Ces transducteurs magnétiques permettent de faire varier très rapidement la tension continue de sortie mais avec une amplitude limitée, le réglage des grandes amplitudes étant assuré par le transformateur de réglage, mais de façon plus lente et par plots successifs.

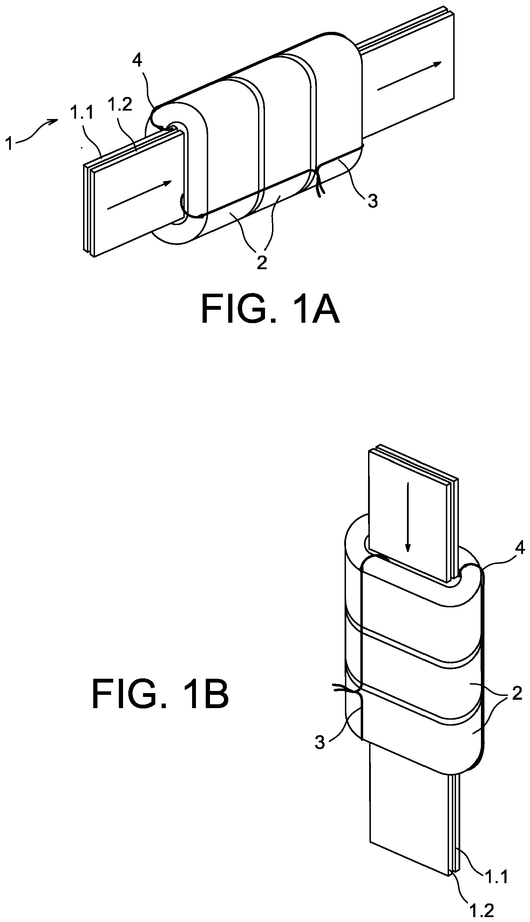

On a représenté sur les figures 1A, 1B un exemple de transducteur magnétique. Sur la figure 1A, il est orienté horizontalement et sur la figure 1B il est orienté verticalement. Un transducteur magnétique comporte un ensemble 1 de barres conductrices 1.1, 1.2. Cet ensemble 1 est destiné à être monté entre un enroulement secondaire du transformateur et une borne de raccordement de sortie positive ou négative destinée à être reliée à un bras positif ou négatif du redresseur (non représentés sur les figures 1A, 1B). Les barres conductrices 1.1, 1.2 d'un ensemble 1 sont montées en parallèle. Elles sont généralement en cuivre. Un ou plusieurs tores magnétiques 2 sont enfilés autour de l'ensemble de barres conductrices 1. Le transducteur magnétique comporte de plus un ou plusieurs circuits électriques dont un circuit électrique de commande 3 pour assurer le réglage de la tension continue. Ce circuit électrique de commande 3 prend la forme d'au moins une boucle ou spire conductrice de commande qui ceinture les tores magnétiques 2. Le transducteur magnétique de l'exemple représenté sur les figures 1A, 1B, comporte en outre un circuit électrique de prémagnétisation 4 qui prend la forme d'au moins une spire conductrice ceinturant également les tores magnétiques 2. On fait circuler dans ces circuits des courants continus ajustables.

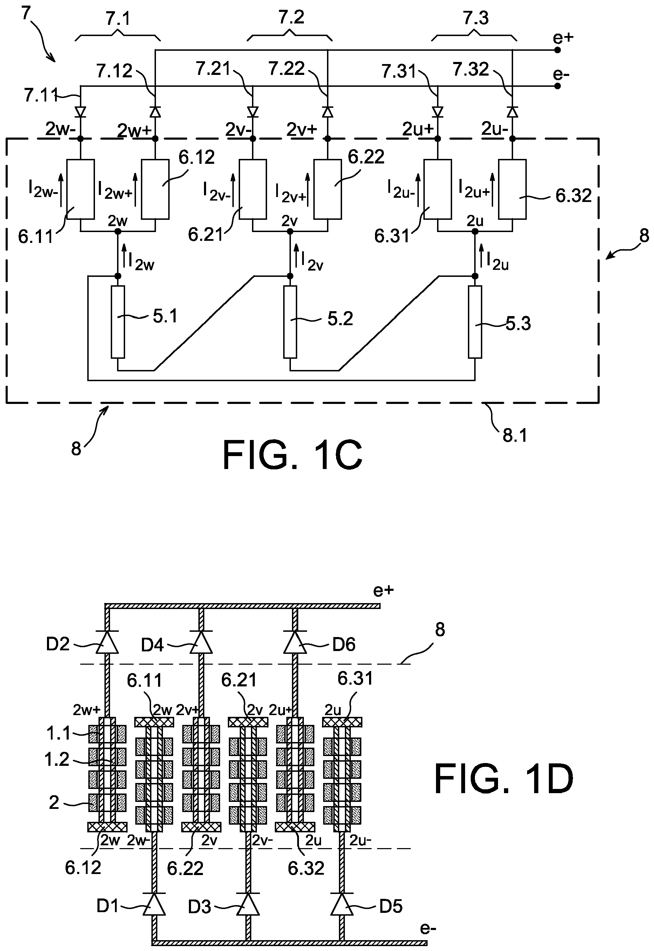

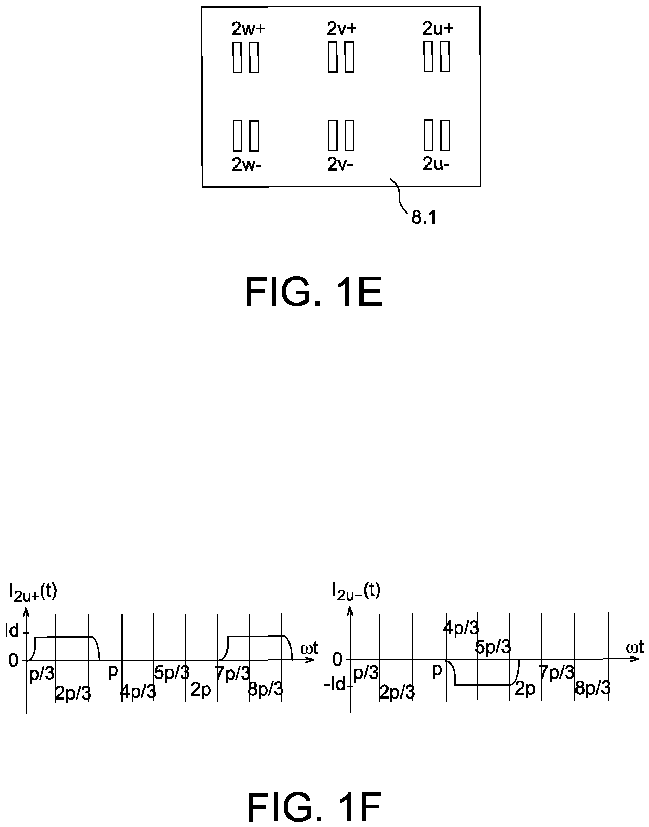

Les enroulements du transformateur sont placés dans une cuve 8 pleine d'un fluide diélectrique tel qu'une huile diélectrique ayant un double rôle d'isolant électrique et de fluide de refroidissement. Les transducteurs magnétiques 1 sont placés dans la cuve 8 du transformateur avec les enroulements. Sur les figures 1, seul le secondaire 5 du transformateur est représenté, pas le primaire et ce dans l'optique de ne pas surcharger les figures. L'extrémité des barres conductrices devant être reliée au redresseur, vient en contact électrique avec une borne de raccordement de sortie 2w-, 2w+, 2v-, 2v+, 2u-, 2u+, accessible depuis l'extérieur de la cuve 8, cette borne de raccordement étant équipée de manière conventionnelle d'une traversée diélectrique traversant une paroi 8.1 de la cuve 8 du transformateur.

La figure 1C montre un circuit électrique montrant l'agencement des enroulements secondaires 5.1, 5.2, 5.3, des transducteurs magnétiques 6.11, 6.12, 6.21, 6.22, 6.31, 6.32 et du redresseur 7. On a représenté un transformateur dont le secondaire 5 est triphasé et comporte trois enroulements 5.1, 5.2, 5.3. montés en triangle dont les trois sommets correspondent à des bornes de phase 2u, 2v, 2w à relier aux transducteurs magnétiques 6.11, 6.12, 6.21, 6.22, 6.31, 6.32. Les transducteurs magnétiques 6.11, 6.12, 6.21, 6.22, 6.31, 6.32 sont schématisés par des rectangles, on ne distingue ni les barres conductrices, ni les tores magnétiques.

Chacune des bornes de phase 2u, 2v, 2w correspond à au moins une extrémité d'un enroulement secondaire 5.1, 5.2, 5.3. par exemple dans un couplage triangle, les extrémités de l'enroulement 5.1 correspondent aux bornes de phase 2w, 2v, les extrémités de l'enroulement 5.2 correspondent aux bornes de phase 2v, 2u, et les extrémités de l'enroulement 5.2 correspondent aux bornes de phase 2u, 2w.

Chaque borne de phase 2u, 2v, 2w est reliée à deux transducteurs magnétiques. La borne de phase 2u est reliée aux transducteurs magnétiques 6.11, 6.12. La borne de phase 2v est reliée aux transducteurs magnétiques 6.21, 6.22. La borne de phase 2w est reliée aux transducteurs magnétiques 6.31, 6.32.

Le redresseur 7 comporte un certain nombre de paires 7.1, 7.2, 7.3 de bras comprenant chacun un composant semi-conducteur de redressement D1, D2, D3, D4, D5, D6.

Sur la figure 1C, seule une moitié du redresseur 7 est représentée comme on va l'expliquer plus loin

Dans une paire 7.1, 7.2, 7.3 de bras, on distingue un bras dit positif 7.12, 7.22, 7.32 et un bras dit négatif 7.11, 7.21, 7.31. Tous les bras positifs 7.12, 7.22, 7.32 sont reliés à une même borne positive e+ et tous les bras négatifs 7.11, 7.21, 7.31 à une même borne négative e-, la tension de sortie continue étant accessible entre la borne positive e+ et la borne négative e-. La charge à alimenter en courant continu est branchée entre la borne positive e+ et la borne négative e- du redresseur 7.

Les ponts redresseurs sont à diodes ce qui est un gage de fiabilité et de robustesse. En fait chaque enroulement secondaire 5.1, 5.2, 5.3 a une extrémité 2w, 2v, 2u reliée d'une part à un bras négatif 7.11, 7.21, 7.31 du redresseur 7 et d'autre part à un bras positif 7.12, 7.22, 7.32 du redresseur 7.

On a dénommé 2w- une borne de raccordement négative de sortie reliée au transducteur magnétique 6.11. Lorsque le redresseur 7 est branché au transformateur le bras négatif 7.11 du redresseur est branché à cette borne de raccordement négative de sortie 2w-. On a dénommé 2w+ une borne de raccordement positive de sortie reliée au transducteur magnétique 6.12. Lorsque le redresseur 7 est branché au transformateur le bras positif 7.12 du redresseur est branché à cette borne de raccordement positive de sortie 2w+.

De la même manière, 2v- représente une borne de raccordement négative de sortie reliée au transducteur magnétique 6.21. Lorsque le redresseur 7 est branché au transformateur, le bras négatif 7.21 du redresseur est branché à cette borne de raccordement négative de sortie 2v-.

La borne 2v+ est une borne de raccordement positive de sortie reliée au transducteur magnétique 6.22. Lorsque le redresseur 7 est branché au transformateur, le bras positif 7.22 du redresseur est branché à cette borne de raccordement positive de sortie 2v+.

De la même manière, 2u- représente une borne de raccordement négative de sortie reliée au transducteur magnétique 6.31. Lorsque le redresseur 7 est branché au transformateur, le bras négatif 7.31 du redresseur est branché à cette borne de raccordement négative de sortie 2u-.

La borne 2u+ est une borne de raccordement positive de sortie reliée au transducteur magnétique 6.32. Lorsque le redresseur 7 est branché au transformateur, le bras positif 7.32 du redresseur est branché à cette borne de raccordement positive de sortie 2u+.

Ces bornes de raccordement de sortie 2w+, 2w-, 2v+, 2v-, 2u+, 2u- sont disposées sur une paroi 8.1 de la cuve 8 du transformateur schématisée par des pointillés. Ces bornes de raccordement de sortie 2w+, 2w-, 2v+, 2v-, 2u+, 2u- sont placées à l'extérieur de la cuve pour que le branchement du redresseur 7 puisse être fait.

Dans cette application, le transformateur comporte généralement deux primaires (non représentés) et deux secondaires triphasés, seul l'un d'entre eux est représenté. Le redresseur 7 est alors un pont redresseur dodécaphasé composé de deux redresseurs élémentaires hexaphasés montés en parallèle et chaque secondaire est relié à un redresseur hexaphasé élémentaire. C'est ce redresseur hexaphasé élémentaire qui est représenté.

Une borne de phase 2u, 2v, 2w est donc reliée aux bras d'une paire 7.3, 7.1, 7.2 via une paire de transducteurs magnétiques. Les transducteurs magnétiques d'une paire, par exemple 6.11, 6.12, sont reliés d'un côté à une même borne de phase 2w et de l'autre aux bras de redresseurs positif et négatif 7.11, 7.12 d'une même paire 7.1.

Sur la figure 1D, on a représenté de manière plus détaillée, les transducteurs magnétiques 6.11, 6.12, 6.21, 6.22, 6.31, 6.32 et leur montage au redresseur 7. On voit nettement pour chaque transducteur magnétique 6.11, 6.12, 6.21, 6.22, 6.31, 6.32, un ensemble de deux barres conductrices 1.1, 1.2 montées en parallèle, l'une des extrémités de l'ensemble étant à relier à un bras du redresseur via une borne de raccordement de sortie 2w+, 2w-, 2v+, 2v-, 2u+, 2u- et l'autre extrémité à au moins un enroulement du secondaire 5.1, 5.2, 5.2 au niveau d'une borne de phase 2w, 2v, 2u. On a représenté quatre tores magnétiques 2 par ensemble de barres conductrices 1.1, 1.2, c'est-à-dire par transducteur magnétique.

Dans le transformateur, les ensembles de barres conductrices peuvent être montés de manière horizontale ou verticale.

Sur la figure 1E on a représenté une vue de face d'une paroi 8.1 de la cuve, cette paroi 8.1 étant équipée des six bornes de raccordement de sortie 2u+, 2u-, 2v+, 2v-, 2w+, 2w- reliées aux transducteurs magnétiques. Les bras du redresseur viendront se brancher à ces bornes de raccordement de sortie.

Les bornes de raccordement négatives de sortie 2u-, 2v-, 2w- destinées à être reliées aux bras négatifs du redresseur sont dans la partie basse de la paroi 8.1 et les bornes de raccordement positives de sortie 2u+, 2v+, 2w+ destinées à être reliées aux bras positifs du redresseur sont dans la partie haute de la paroi 8.1.

Avec un tel agencement des bornes de raccordement de sortie 2u-, 2v-, 2w- et 2u+, 2v+, 2w+, les transducteurs magnétiques 6.11, 6.12 destinés à être reliés à une même borne de phase 2w, 2v, 2u sont agencés tête bêche, pour un des transducteurs magnétiques référencé 6.12, l'extrémité reliée à la borne de raccordement positive de sortie 2w+ est vers le haut et pour l'autre transducteur magnétique 6.11, l'extrémité reliée à la borne de raccordement négative de sortie 2w- est vers le bas.

La figure 1F montre sous forme de chronogramme, pour la phase u, le courant $I_{2u+}(t)$ et $I_{2u-}(t)$ circulant dans les deux ensembles de barres conductrices des transducteurs magnétiques 6.31, 6.32 reliés à la même borne de phase 2u, alors que le redresseur fonctionne. Chaque transducteur magnétique 6.31, 6.32 voit pendant un tiers de période un courant unidirectionnel quasi rectangulaire de module +Id, -Id.

Les courants sont dans le même sens dans les barres conductrices d'un même transducteur magnétique, par contre ils sont dans des sens opposés dans les deux transducteurs magnétiques reliés à un même enroulement secondaire.

Au dessus d'une certaine valeur de courant continu Id de l'ordre de 5 kA, la chute de tension produite par l'ensemble des transducteurs magnétiques ne dépend plus de cette valeur de courant.

Les transformateurs sont soumis à des essais de performance et de conformité dont des essais en court-circuit qui permettent de déterminer leurs caractéristiques en court-circuit, notamment leurs impédances de court-circuit, leurs pertes en court-circuit et leurs échauffements en court-circuit desquelles sont déduites leurs caractéristiques en charge. Les conditions de ces essais en court-circuit sont notamment décrites dans la norme CEI 60076-1 paragraphe 10.4.

Lors de ces essais en court-circui, les bornes de raccordement de sortie 2u+, 2u-, 2v+, 2v-, 2w+, 2w- sont mises en court-circuit, c'est-à-dire toutes reliées entre elles.

Lors de ces essais en court-circuit, quand on applique au primaire du transformateur la tension de court-circuit, les courants nominaux sont supposés circuler dans les enroulements primaires et secondaires du transformateur ainsi que dans les barres conductrices des transducteurs magnétiques. La tension de court-circuit ainsi que les courants résultants doivent être sensiblement sinusoïdaux, mais alors dans les barres conductrices d'un transducteur magnétique, c'est-à-dire d'un ensemble de barres conductrices ceintes par un même tore magnétique, les courants circulent dans un même sens et leurs effets magnétiques sur les tores magnétiques s'additionnent en générant une impédance additionnelle et des harmoniques importants de courant et de tension qui viennent fausser les mesures d'impédance et de pertes en court-circuit, voire les empêcher.

Donc la présence des transducteurs magnétiques dans la cuve du transformateur fausse les résultats des essais en court-circuit qui sont propres aux parties actives du transformateur, c'est-à-dire ses enroulements et leurs noyaux. En effet, lors des essais, on effectue une mesure d'impédance et des pertes en court-circuit pour une paire d'enroulements primaire-secondaire en appliquant une tension sensiblement sinusoïdale appropriée à l'enroulement du primaire pour obtenir le courant assigné du transformateur, l'enroulement du secondaire étant court-circuité. A cause de la présence des tores magnétiques, la valeur mesurée est plus élevée que celle que l'on devrait obtenir pour le transformateur seul. De plus, les tores magnétiques produisent des harmoniques en tension et en courant qui polluent les mesures.

L'une des méthodes visant à réaliser les essais en court-circuit du transformateur nécessite du matériel d'essais supplémentaire comme des bancs de capacités correctement dimensionnés pour une compensation de puissance réactive supplémentaire engendrée par la présence des tores magnétiques et des appareils de mesure appropriés pour relever des composantes harmoniques en courant et en tension engendrées par la présence des tores magnétiques. De plus avec cette méthode, la mesure de l'impédance de court-circuit et des pertes en court-circuit n'est pas effectuée à la fréquence nominale sous tension approximativement sinusoïdale comme l'impose la norme CEI 60076-1 paragraphe 10.4. La mesure est indirecte, les effets des harmoniques sont évalués par calcul à partir des relevés effectués et l'impédance supplémentaire engendrée par les tores magnétiques des transducteurs magnétiques est extrapolée. Les valeurs mesurées sont alors corrigées de ces grandeurs extrapolées pour obtenir les résultats recherchés.

L'autre méthode consiste à partir de tous les transformateurs d'une série devant être utilisés dans une même installation, à mesurer en atelier, alors que les enroulements sont hors cuve et à sec, sous courant d'alimentation injecté au primaire réduit, les pertes en court-circuit et l'impédance de court-circuit de la paire d'enroulements primaire-secondaire et à ne placer qu'un seul des transformateurs complètement monté mais exempt des transducteurs magnétiques en plate-forme d'essai pour lui faire subir les essais de court-circuit réalisés en conformité avec le paragraphe 10.4 de la norme CEI 60076-1. La différence obtenue pour cet appareil entre les mesures faites hors cuve et en plateforme d'essai est alors ajoutée, aux résultats de mesure des autres transformateurs réalisés à sec et hors cuve pour obtenir les résultats recherchés.

Cette seconde méthode est coûteuse en temps et en argent. Les mesures hors cuve et à sec pour tous les transformateurs réalisées systématiquement perturbent le fonctionnement des ateliers.

Le transformateur qui subit les essais en plate-forme, doit ensuite retourner en atelier pour être vidé de son fluide diélectrique, sorti de la cuve pour permettre le montage des transducteurs magnétiques, placé dans un four à phase vapeur pour le séchage, remis dans la cuve, cette dernière devant être remplie une nouvelle fois. Le transformateur peut alors être de nouveau présenté en plateforme d'essai pour effectuer d'autres essais normatifs. Toutes ces opérations sont coûteuses en main d'oeuvre mais le coût principal provient de l'engorgement supplémentaire créé en plateforme d'essai qui dans le processus de fabrication des transformateurs de puissance est déjà un goulet d'étranglement

Le brevet US 3 085 188 décrit un transformateur de redresseur dans lequel un groupe de barres conductrices est ceint par un tore magnétique ou un jeu de tores magnétiques les courants circulant dans ces barres conductrices dans une seule direction.

## EXPOSÉ DE L'INVENTION

La présente invention a justement comme but de proposer un transformateur de redresseur équipé de transducteurs magnétiques, ces transducteurs magnétiques n'ayant pas ou quasiment pas d'influence sur les mesures d'impédance de court-circuit et de pertes en court-circuit du transformateur seul, ces mesures étant effectuées lorsque le transformateur est complètement monté en cuve et est équipé des transducteurs magnétiques à tores magnétiques.

Un autre but de l'invention est de proposer un transformateur pour redresseur équipé de transducteurs magnétiques à tores magnétiques qui peut être testé en court-circuit complètement monté en cuve de manière aisée et rapide sans nécessiter beaucoup de main d'oeuvre.

Un autre but de l'invention est de proposer un transformateur pour redresseur équipé dans sa cuve de transducteurs magnétiques apte à de subir des essais pour connaître son impédance de court-circuit et ses pertes en court-circuit tout en respectant les préconisations de la norme internationale CEI60076-1 paragraphe 10.4.

Pour atteindre ces buts l'invention concerne plus précisément un transformateur de redresseur comportant dans une cuve au moins un primaire, au moins un secondaire avec des enroulements de phase, une paire de transducteurs magnétiques par enroulement de phase, l'un des transducteurs comprenant une ou plusieurs premières barres conductrices et l'autre une plusieurs secondes barres conductrices. Les premières et secondes barres conductrices de la paire de transducteurs magnétiques sont toutes reliées par une extrémité à un même enroulements de phase, la ou chaque première barre conductrice de la paire de transducteurs étant reliée par une autre extrémité à une unique borne positive de raccordement de sortie destinée à être connectée à un bras positif du redresseur, la ou chaque seconde barre conductrice de la paire de transducteurs étant reliée par une autre extrémité à une unique borne négative de raccordement de sortie destinée à être connectée à un bras positif du redresseur. Toutes les barres conductrices de la paire de transducteurs magnétiques forment un ou plusieurs groupes, chaque groupe étant ceint par un tore magnétique ou un jeu de tores magnétiques comprenant au moins une première barre conductrice et au moins une seconde barre conductrice, de manière que lorsque les bornes de raccordement de sortie sont court-circuitées et que le transformateur est alimenté en courant alternatif par son primaire, les barres conductrices d'un groupe sont parcourues par des courants de directions opposées tels que le courant ou la somme des courants dans une direction est sensiblement égal(e) au courant ou à la somme des courants dans l'autre direction.

Lorsqu'il y a dans la paire de transducteurs magnétiques plusieurs premières barres conductrices et/ou plusieurs secondes barres conductrices, les premières barres conductrices sont montées en parallèle et/ou les secondes barres conductrices sont montées en parallèle.

Dans la paire de transducteurs magnétiques le nombre de premières barres conductrices n'est pas forcément égal au nombre de secondes barres conductrices, mais c'est préférable.

Dans un groupe de barres conductrices ceint par un tore magnétique ou un jeu de tores magnétiques, les premières barres conductrices peuvent être plus proches dudit tore magnétique ou des tores magnétiques dudit jeu de tores magnétiques que la ou chaque seconde barre conductrice.

Dans un groupe de barres conductrices ceint par un tore magnétique ou un jeu de tores magnétiques, les secondes barres conductrices ceintes par ledit tore magnétique ou ledit jeu de tores magnétiques peuvent être plus proches dudit tore magnétique ou des tores magnétiques dudit jeu de tores magnétiques que la ou chaque première barre conductrice.

En variante, une première barre conductrice ou une seconde barre conductrice d'un groupe peut être intercalée entre deux secondes barres conductrices ou deux premières barres conductrices du groupe.

Il est possible que deux premières barres conductrices ou deux secondes barres conductrices d'un même transducteur magnétique soient ceintes par des tores magnétiques ou des jeux de tores magnétiques distincts.

Les enroulements du secondaire lorsqu'ils sont au nombre de trois peuvent être montés en triangle ou en étoile.

Pour des raisons de réduction d'encombrement de la cuve du transformateur, il est préférable que la ou chaque première barre conductrice et la ou chaque seconde barre conductrice soient agencées sensiblement verticalement dans la cuve. Il est bien sûr possible qu'elles soient agencées sensiblement horizontalement dans la cuve.

Au moins une boucle conductrice de commande entoure le tore magnétique ou tous les tores magnétiques du jeu de tores magnétiques.

Au moins une boucle conductrice de prémagnétisation entoure le tore magnétique ou tous les tores magnétiques du jeu de tores magnétiques.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

Les figures 1A, 1B montrent des exemples de transducteurs magnétiques connus,

les figures 1C, 1D montrent schématiquement le montage des enroulements secondaires, des transducteurs magnétiques et du redresseur dans un ensemble transformateur redresseur connu,

la figure 1E est une vue de face d'une paroi du transformateur de redresseur connu,

la figure 1F illustre un chronogramme du courant circulant dans les barres conductrices des transducteurs magnétiques associés à la phase u du secondaire du transformateur de redresseur connu ;

Les figures 2A, 2B montrent schématiquement le montage des enroulements secondaires, des transducteurs magnétiques et du redresseur dans un ensemble transformateur redresseur selon l'invention,

la figure 2C illustre un chronogramme du courant circulant dans les barres conductrices des deux groupes associés à la phase u du secondaire du transformateur de redresseur connu,

les figures 2D, 2E, 2F, 2G montrent différents agencements pour les barres conductrices d'un ou deux groupes de barres conductrices associés à la phase w du secondaire du transformateur de redresseur selon l'invention ;

les figures 3A, 3B montrent schématiquement une variante du montage des enroulements secondaires, des transducteurs magnétiques et du redresseur dans un ensemble transformateur redresseur selon l'invention,

la figure 3C illustre un chronogramme du courant circulant dans les barres conductrices des deux groupes associés à la phase u du secondaire du transformateur de redresseur selon l'invention,

les figures 3D, 3E montrent différents agencements pour les barres conductrices d'un groupe de barres conductrices associé à la phase w du secondaire du transformateur de redresseur selon l'invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

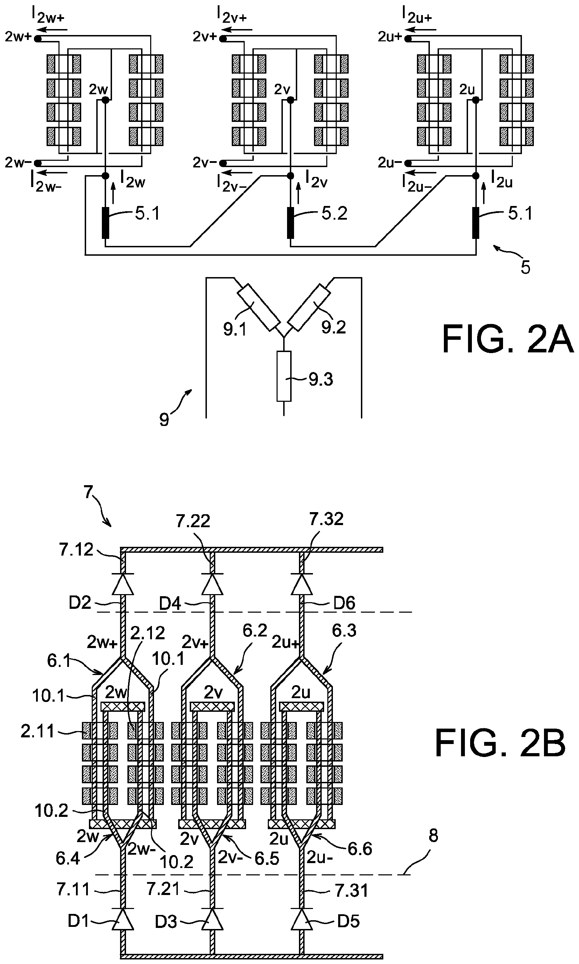

On se réfère maintenant à la figure 2A qui montre maintenant un premier exemple d'un transformateur équipé de transducteurs magnétiques selon l'invention. Sur la figure 2A, à la fois un primaire référencé 9 et un secondaire 5 du transformateur sont montrés. Le primaire 9 est formé de trois enroulements 9.1, 9.2, 9.3 agencés en étoile. Le secondaire 5 lui comporte trois enroulements de phase 5.1, 5.2, 5.3 agencés en triangle.

Sur la figure 2B sont représentés les transducteurs magnétiques 6.1 à 6.6 dont est équipé le transformateur selon l'invention ainsi que le redresseur 7 auquel est relié ledit transformateur. La cuve 8 qui contient les enroulements 9, 5 du transformateur et les transducteurs magnétiques 6.1, 6.2, 6.3, 6.4, 6.5, 6.6 est schématisée par les pointillés.

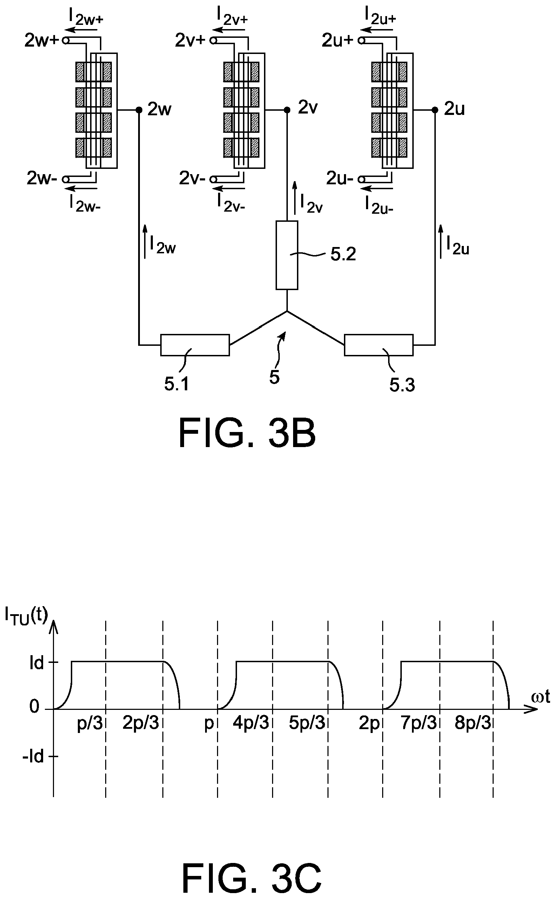

Les trois sommets du triangle des enroulements secondaires 5.1, 5.2, 5.3 correspondent aux bornes de phase 2u, 2v, 2w à relier aux transducteurs magnétiques 6.1 à 6.6. Chacune des bornes 2u, 2v, 2w correspond à une extrémité d'un enroulement secondaire 5.1, 5.2, 5.3. Ainsi, les extrémités de l'enroulement 5.1 correspondent aux bornes 2w, 2v, les extrémités de l'enroulement 5.2 correspondent aux bornes 2v, 2u, et les extrémités de l'enroulement 5.2 correspondent aux bornes 2u, 2w. En variante, les enroulements secondaires auraient pu être agencés en étoile comme illustré sur la figure 3B.

Chaque borne 2u, 2v, 2w est reliée à une paire de transducteurs magnétiques 6.1, 6.2, 6.3, 6.4, 6.5, 6.6, c'est-à-dire à deux transducteurs magnétiques. La borne 2u est reliée à la première paire formée des transducteurs magnétiques 6.3, 6.6. La borne 2v est reliée à la deuxième paire formée des transducteurs magnétiques 6.2, 6.5. La borne 2w est reliée à la troisième paire formée des transducteurs magnétiques 6.1, 6.4.

Parmi les transducteurs magnétiques d'une paire, par exemple ceux référencés 6.1, 6.4, l'un comporte une ou plusieurs premières barres conductrices 10.1 et l'autre une ou plusieurs secondes barres conductrices 10.2. Les premières et secondes barres conductrices 10.1, 10.2 d'une paire de transducteurs magnétiques 6.1, 6.4 sont toutes reliées par une extrémité à un même enroulement de phase 5.1, 5.2, 5.3. Sur la figure 2B, puisque les enroulements de phase ne sont pas représentés, on a juste montré que les premières et secondes barres conductrices 10.1, 10.2 d'une paire de transducteurs magnétiques 6.1, 6.4 sont toutes reliées par une extrémité à une même borne de phase 2w, 2v, 2u. Dans l'exemple des figures 2A, 2B, on a représenté deux premières barres conductrices 10.1 dans le transducteur magnétique 6.1 et deux secondes barres conductrices 10.2 dans le transducteur magnétique 6.4.

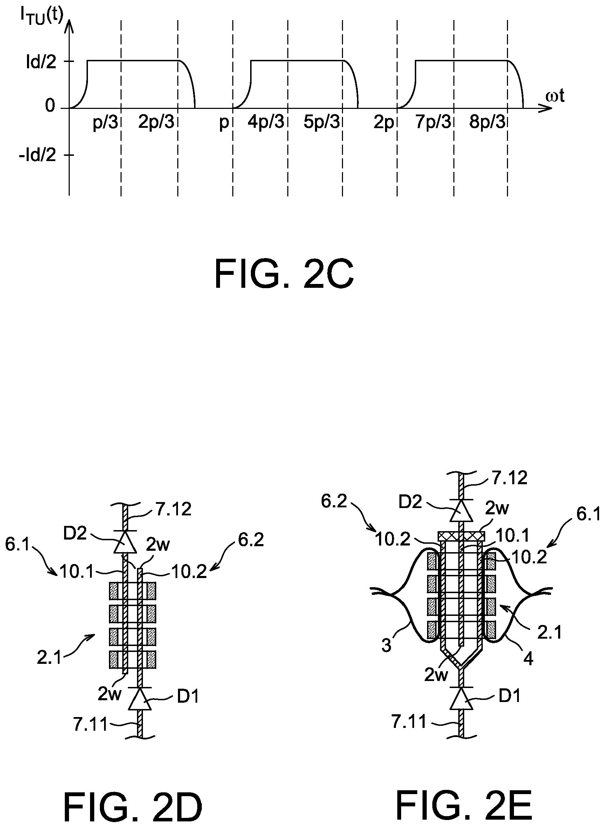

Sur la figure 2D, on a représenté dans un transducteur magnétique 6.1 de la paire seulement une première barre conductrice 10.1 et dans l'autre transducteur magnétique 6.4 seulement une seconde barre conductrice 10.2. C'est la configuration la plus simple.

Sur la figure 2E, on a représenté dans un transducteur magnétique 6.1 de la paire une première barre conductrice 10.1 et deux secondes barres conductrices 10.2 dans l'autre transducteur magnétique 6.4 de la paire. Il n'y a pas forcément le même nombre de premières barres conductrices et de secondes barres conductrices dans les deux transducteurs magnétiques d'une paire.

Chaque première barre conductrice 10.1 d'une paire de transducteurs magnétiques est reliée par une autre extrémité à une unique borne positive de raccordement de sortie 2u+, 2v+, 2w+ destinée à être connectée à un bras positif 7.12, 7.22, 7.32 du redresseur 7. Chaque seconde barre conductrice 10.2 de la paire de transducteurs magnétiques est reliée par une autre extrémité à une unique borne négative de raccordement de sortie 2u-, 2v-, 2w- destinée à être connectée à un bras négatif 7.11, 7.21, 7.31 du redresseur 7. Le redresseur 7 est configuré comme celui de la figure 1C avec des diodes D1 à D6.

Les barres conductrices de la paire de transducteurs magnétiques sont réparties en un ou plusieurs groupes de barres conductrices, chaque groupe étant ceint par un tore magnétique ou par un jeu de tores magnétiques 2.11, 2.12, 2.21, 2.22, 2.31, 2.32 et comprend au moins une première barre conductrice 10.1 et au moins une seconde barre conductrice 10.2. On se réfère toujours aux figures 2A, 2B.

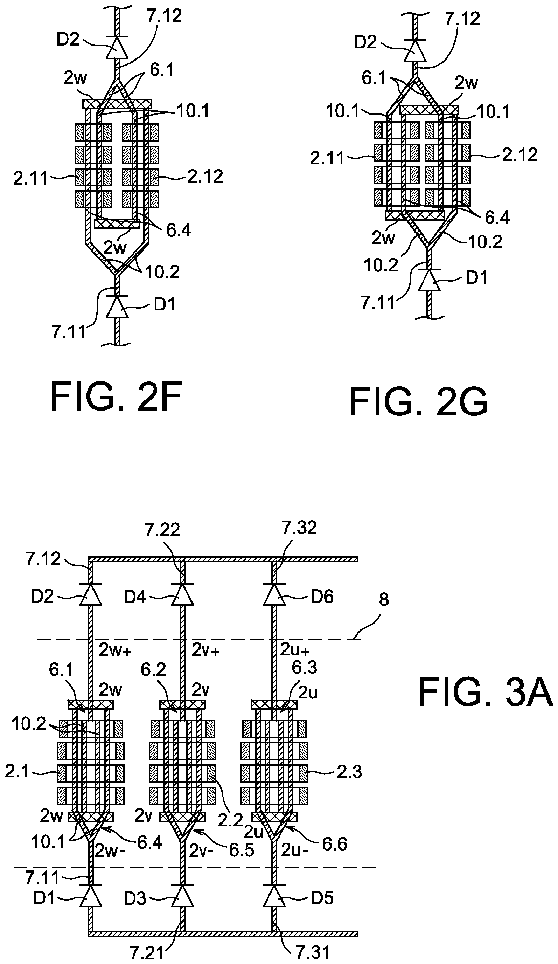

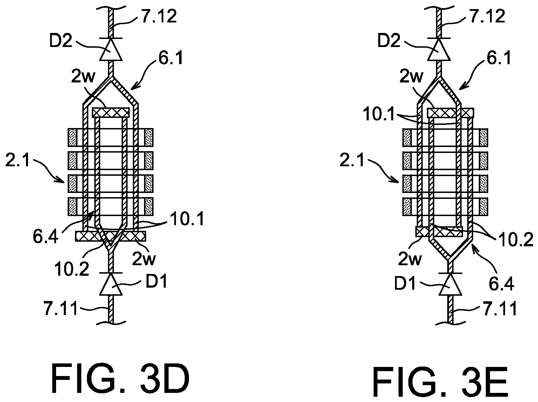

Sur les figures 2 et 3, on a représenté un jeu de tores magnétiques pour chaque groupe de barres conductrices mais ce n'est pas limitatif.

Ainsi lorsque les bornes de raccordement de sortie 2u+, 2v+, 2w+, d'une part et 2u-, 2v-, 2w-d'autre part sont court-circuitées et que le transformateur est alimenté en courant alternatif par son primaire 9, deux barres conductrices 10.1, 10.2, du même groupe, c'est-à-dire ceintes par le même tore magnétique ou le même jeu 2.11, 2.12, 2.21, 2.22, 2.31, 2.32 de tores magnétiques sont parcourues par des courants alternatifs de directions opposées. Dans ce cas, puisque les bornes de raccordement de sortie sont court-circuitées, c'est-à-dire reliées entre elles, par exemple à proximité des pointillés de la figure 2B, les diodes D1 à D6 n'interviennent pas. Dans la barre 10.1, le courant circule de la borne 2w+ vers la borne 2w. Dans la barre 10.2, le courant circule de la borne 2w-vers la borne 2w.

Au total la somme des courants parcourant les barres conductrices 10.1, 10.2 du même groupe dans une direction est sensiblement égale à la somme des courants parcourant les barres conductrices du même groupe dans l'autre direction. Bien sûr s'il n'y a qu'une barre qui est parcourue par un courant dans une des directions, la somme se limite à ce courant. L'induction induite sur chaque tore magnétique du jeu est alors très petite et de ce fait les effets des tores magnétiques sont rendus quasiment négligeables.

Dans l'exemple des figures 2A, 2B, pour chaque enroulement de phase 5.1, 5.2, 5.3, dans un groupe de barres conductrices, on compte une première barre conductrice 10.1 et une seconde barre conductrice 10.2, mais dans chaque transducteur magnétique 6.1, 6.2, 6.3, 6.4, il y a deux premières barres conductrices 10.1 et deux secondes barres conductrices 10.2. Un groupe de barres conductrices ceint par un jeu de tores magnétiques peut correspondre à des barres conductrices appartenant aux deux transducteurs magnétiques de la paire. Dans l'exemple des figures 2A, 2B, il y a deux groupes de barres conductrices, le second groupe comporte aussi une première barre conductrice 10.1 et une seconde barre conductrice 10.2, le jeu de tores magnétiques porte la référence 2.12.

Sur la figure 2D, le jeu de tores magnétiques 2.1 encercle un groupe de barres conductrices formé d'une seule première barre conductrice 10.1 et d'une seule seconde barre conductrice 10.2. Les deux transducteurs magnétiques de la paire comportent seulement les deux barres conductrices 10.1, 10.2 et le jeu de tores magnétiques 2.1 qui les ceint.

Sur la figure 2E, le jeu de tores magnétiques 2.1 encercle un groupe de barres conductrices formé d'une seule première barre conductrice 10.1 et de deux secondes barres conductrices 10.2. Les deux transducteurs magnétiques comportent seulement les trois barres conductrices 10.1, 10.2 et le jeu de tores magnétiques 2.1 qui les ceint.

Dans l'exemple des figures 2A, 2B, si on s'intéresse plus particulièrement aux barres conductrices des deux groupes, ceintes par les deux jeux de tores magnétiques 2.11, 2.12, les premières barres conductrices 10.1 destinées à être reliés au bras positif 7.12 du redresseur 7 sont à l'extérieur des secondes barres conductrices 10.2 destinées à être reliées au bras négatif 7.11. L'inverse aurait été possible comme illustré sur la figure 2F ou bien, on aurait pu placer à l'extérieur d'un côté une première barre conductrice 10.1 destinée à être reliée à un bras positif 7.12 et de l'autre une seconde barre conductrice 10.2 destinée être reliée à un bras négatif 7.11 comme sur la figure 2G. Dans ce dernier cas, les premières barres conductrices et les secondes barres conductrices sont qualifiées d'interdigitées.

Sur la figure 2B, on a représenté le secondaire 5 du transformateur avec ses enroulements 5.1, 5.2, 5.3 selon l'invention et les transducteurs magnétiques qui se trouvent avec lui dans la cuve 8 schématisée par les pointillés. Le raisonnement suivant est fait pour une phase, celle correspondant à la borne de phase 2w. Cette borne de phase 2w est reliée d'une part à une extrémité des deux premières barres conductrices 10.1 extérieures destinées à être reliées à un même bras positif 7.12, et d'autre part à une extrémité des deux secondes barres conductrices 10.2 intérieures destinées à être reliées à un même bras négatif 7.11. L'autre extrémité des deux premières barres conductrices 10.1 forme la borne de raccordement positive de sortie 2w+ et l'autre extrémité des deux secondes barres conductrices 10.2 forme la borne de raccordement négative de sortie 2w-. Les bornes de raccordement de sortie 2w+, 2w- seraient placées sur la paroi 8.1 de la cuve 8 comme on l'a représenté sur la figure 1E.

Comme représenté sur les figures 1A, 1B, un tore magnétique s'il est seul à ceindre un groupe de barres conductrices ou un groupe de tores magnétiques est équipé au moins d'un circuit de commande 3 et éventuellement d'autres circuits dont un circuit de prémagnétisation. Ces circuits ne sont visibles que sur la figure 2E.

En fonctionnement avec le redresseur 7 branché, les jeux de tores magnétiques ceignant un groupe de barres conductrices reliées à une même borne de phase voient pendant deux tiers de période par période un courant unidirectionnel quasiment rectangulaire de module Id/2. La figure 2C montre un chronogramme du courant circulant dans les barres conductrices d'un groupe, ces barres conductrices étant reliées à la borne de phase 2u. I

$$I_T(t) = I_{2u+}(t)/2 - I_{2u-}(t)/2$$

Lorsque l'amplitude Id/2 est suffisamment grande, la chute de tension obtenue en sortie du redresseur est sensiblement la même qu'avec l'exemple conventionnel des figures 1, pour un groupe de barres conductrices ceint par un jeu de tores magnétiques quasi identique à celui de la figure 1D et une commande des tores magnétiques sensiblement identique.

Sur les figures 3A, 3B on a représenté partiellement un autre exemple de transformateur équipé de transducteurs magnétiques de commande selon l'invention.

Le transformateur comporte maintenant au moins un secondaire triphasé 5 dont les trois enroulements 5.1, 5.2, 5.3 sont agencés en étoile. Les trois enroulements 5.1, 5.2, 5.3 ont une extrémité commune (non référencée) et une autre extrémité formant une borne de phase 2u, 2v, 2w.

Maintenant chaque borne de phase 2u, 2v, 2w est reliée à une paire de transducteurs magnétiques 6.1, 6.4 ; 6.2, 6.5 ; 6.3 ; 6.6, les transducteurs magnétiques de la paire partagent un ou plusieurs mêmes tores magnétiques et dans l'exemple des figures 3, il s'agit d'un même jeu de tores magnétiques 2.1, 2.2, 2.3.

Comme précédemment, la paire de transducteurs magnétiques 6.1, 6.4 ; 6.2, 6.5 ; 6.3, 6.6 comporte une ou plusieurs premières barres conductrices 10.1 et une ou plusieurs secondes barres conductrices 10.2. Les premières et les secondes barres conductrices 10.1, 10.2 de la paire sont reliées par une première extrémité à une même borne de phase 2u, 2v, 2w.

Les premières barres conductrices 10.1 d'une paire de transducteurs magnétiques 6.1, 6.4 ; 6.2, 6.5 ; 6.3, 6.6 sont reliées par une autre extrémité à une unique borne positive de raccordement de sortie 2u+, 2v+, 2w+ destinée à être connectée à un bras positif 7.12, 7.22, 7.32 du redresseur 7. Les secondes barres conductrices 10.2 d'une paire de transducteurs magnétiques 6.1, 6.4 ; 6.2, 6.5 ; 6.3, 6.6 sont reliées par une autre extrémité à une unique borne négative de raccordement de sortie 2u-, 2v-, 2w-destinée à être connectée à un bras négatif 7.11, 7.21, 7.31 du redresseur 7.

Dans une paire de transducteurs magnétiques 6.1, 6.4 ; 6.2, 6.5 ; 6.3, 6.6, les premières barres conductrices 10.1 sont montées en parallèle, il en est de même pour les secondes barres conductrices 10.2.

Sur la figure 3A, à partir de la borne de phase 2w, par exemple, il y a deux secondes barres conductrices 10.2 montées en parallèles entre la borne de phase 2w d'une part et d'autre part la borne de raccordement de sortie négative 2w-. De la même manière, il y a deux premières barres conductrices 10.1 montées en parallèle entre la borne de phase 2w d'une part et d'autre part la borne de raccordement de sortie positive 2w+.

On retrouve le même montage avec d'autres premières barres conductrices et d'autres secondes barres conductrices.

Dans cet exemple, les premières barres conductrices 10.1 et les secondes barres conductrices 10.2 de la paire de transducteurs magnétiques 6.1, 6.4 ; 6.2, 6.5 ; 6.3, 6.6, c'est-à-dire reliées à une même borne de phase appartiennent au même groupe. Cela signifie qu'elles sont ceintes par un même jeu de tores magnétiques 2.1, 2.2, 2.3. Dans ce groupe de barres conductrices, on distingue sur la figure 3A, deux premières barres conductrices 10.1 qui sont les plus éloignées des tores magnétiques 2.1, 2.2, 2.3 et deux secondes barres conductrices 10.2 qui sont les plus proches des tores magnétiques 2.1, 2.2, 2.3.

Sur la figure 3D on observe la situation inverse, ce sont les deux secondes barres conductrices 10.2 qui sont les plus éloignées des tores magnétiques 2.1 et les deux premières barres conductrices 10.1 sont les plus proches des tores magnétiques 2.1. En variante encore comme représenté sur la figure 3E, les premières barres conductrices 10.1 et les deux secondes barres conductrices 10.2 sont alternées. Une des premières barres conductrices 10.1 est proche des tores magnétiques 2.1 et l'autre en est plus éloignée. Il en est de même pour les secondes barres conductrices 10.2.

La figure 3B montre le montage entre les transducteurs magnétiques et les enroulements 5.1, 5.2, 5.3 du secondaire 5. Les enroulements 5.1, 5.2, 5.3 du secondaire 5 sont montés en étoile. Chaque enroulement à une extrémité commune avec les autres enroulements du secondaire et une extrémité qui forme une borne de phase 2u, 2v, 2w.

Dans ce mode de réalisation, un tore magnétique s'il est seul à ceindre un groupe de barres conductrices ou un jeu de tores magnétique est équipé au moins d'un circuit de commande et éventuellement d'autres circuits dont un circuit de prémagnétisation. Ces circuits sont similaires à ceux montrés sur les figures 1A, 1B, ils n'ont pas été représentés sur les figures 3 pour ne pas surcharger les figures.

Le nombre de barres conductrices d'un transducteur magnétique peut être supérieur à deux. Dans un groupe de barres conductrices, le nombre de premières barres conductrices peut être différent du nombre de secondes barres conductrices. On s'arrange toutefois pour que la différence entre le nombre de premières barres conductrices et le nombre de secondes barres conductrices soit inférieur à deux.

Maintenant, lorsque les bornes de raccordement de sortie 2w+, 2w-, 2v+, 2v-, 2u+, 2u-sont court-circuitées, ce qui permet de faire les essais en court-circuit, dans un groupe de barres conductrices ceint d'un ou plusieurs tores magnétiques, les courants circulent dans deux barres conductrices destinées à être reliées l'une à un bras positif et l'autre à un bras négatif du redresseur dans des sens opposés à tout instant. Ces courants sont de module sensiblement égaux, dans la mesure où dans le groupe de barres conductrices on a autant de premières barres conductrices que de secondes barres conductrices. Les effets de ces courants sur les tores magnétiques s'annihilent. Si on n'a pas le même nombre de premières et de secondes barres conductrices dans un groupe de barres conductrices, l'induction induite sur chaque tore magnétique du jeu est toujours petite et de ce fait les effets des tores magnétiques est rendu quasiment négligeable.

En fonctionnement avec le redresseur branché, chaque groupe de barres conductrices ceint par un jeu de tores magnétiques voit pendant deux tiers de période par période un courant unidirectionnel quasiment rectangulaire de module Id. La figure 3C montre un chronogramme du courant circulant dans les barres d'un même groupe. I

$$I_T(t) = I_{2u+}(t)/2 - I_{2u-}(t)/2$$

Lorsque l'amplitude Id est suffisamment grande, la chute de tension obtenue en sortie du redresseur est sensiblement la même qu'avec l'exemple conventionnel des figures 1, pour un groupe de barres conductrices ceint par un jeu de tores magnétiques quasi identique à celui de la figure 1D et une commande des tores magnétiques sensiblement identique.

L'avantage du transformateur équipé des transducteurs magnétiques selon l'invention est que les essais de qualification du transformateur peuvent se réaliser avec les tores magnétiques montés et la cuve pleine du fluide diélectrique de refroidissement et notamment selon les préconisations de la norme internationale CEI 60076-1.

Les essais de qualification peuvent se faire en plateforme d'essais évitant ainsi les perturbations dues aux essais partiels en atelier de montage.

L'ensemble des essais de qualification du transformateur peuvent être réalisés d'un seul tenant à la satisfaction des réceptionnaires du transformateur qui assistent aux essais.

Dans l'usine de fabrication des transformateurs, la planification des essais est simplifiée permettant une meilleure fluidité de ces essais et réduisant le goulot d'étranglement au niveau de la plate-forme d'essais.

La durée des essais de qualification du transformateur est réduite de manière significative. Le délai de livraison pour une série de transformateurs destinée à une même application, comme une l'électrolyse d'aluminium est réduit d'environ un douzième.

Dans la configuration des figures 3, le nombre de tores magnétiques est réduit de moitié par rapport à la configuration des figures 1, puisque pour une phase, on n'a plus qu'un tore magnétique ou un jeu de tores magnétiques pour toutes les barres conductrices reliée à une même borne de phase.

La masse et le volume des tores magnétiques sont réduits de pas tout à fait deux. Le gain de place est appréciable et doit conduire à une réduction de la taille de la cuve du transformateur.

Dans les deux configurations conformes à l'invention, la fréquence de l'induction dans les tores magnétiques est doublée par rapport à la solution conventionnelle des figures 1. Les pertes et le bruit générés risquent toutefois d'être augmentés par rapport à la configuration conventionnelle.

Bien que plusieurs modes de réalisation de la présente invention aient été représentés et décrits de façon détaillée, on comprendra que différents changements et modifications puissent être apportés sans sortir du cadre de l'invention comme défini par les revendications.

**Revendications**

1. Transformateur de redresseur comportant dans une cuve (8) au moins un primaire (9), au moins un secondaire (5) avec des enroulements de phase (5.1, 5.2, 5.3), une paire de transducteurs magnétiques (6.1, 6.4) par enroulement de phase, l'un des transducteurs (6.1) comprenant une ou plusieurs premières barres conductrices (10.1) et l'autre une ou plusieurs secondes barres conductrices (10.2), les premières et secondes barres conductrices de la paire de transducteurs étant toutes reliées par une extrémité à un même enroulements de phase (5.1, 5.2, 5.3), la ou chaque première barre conductrice (10.1) étant reliée par une autre extrémité à une unique borne positive de raccordement de sortie (2w+) destinée à être connectée à un bras positif (7.12) du redresseur (7), la ou chaque seconde barre conductrice (10.2) étant reliée par une autre extrémité à une unique borne négative de raccordement de sortie (2w-) destinée à être connectée à un bras négatif (7.11) du redresseur, **caractérisé en ce que** toutes les barres conductrices (10.1, 10.2) de la paire de transducteurs magnétiques (6.1, 6.4) forment un ou plusieurs groupes, chaque groupe étant ceint par un tore magnétique ou un jeu de tores magnétiques (2.1, 2.2, 2.3) et comprenant une ou plusieurs premières barres conductrices et une ou plusieurs secondes barres conductrices de manière que lorsque les bornes de raccordement de sortie sont court-circuitées et que le transformateur est alimenté en courant alternatif par son primaire, le courant qui parcourt la ou les premières barres conductrices d'un groupe et le courant qui parcourt la ou les secondes barres conductrices du même groupe ont des directions opposées, le courant ou la somme des courants dans une direction étant sensiblement égal(e) au courant ou à la somme des courants dans l'autre direction.

2. Transformateur de redresseur selon la revendication 1, dans lequel lorsqu'il il y a dans la paire de transducteurs magnétiques (6.1, 6.2, 6.3, 6.4, 6.5, 6.6) plusieurs premières barres conductrices (10.1) et/ou plusieurs secondes barres conductrices (10.2), les premières barres conductrices (10.1) sont montées en parallèle et/ou les secondes barres conductrices (10.2) sont montées en parallèle.

3. Transformateur de redresseur selon l'une des revendications 1 ou 2, dans lequel dans la paire de transducteurs magnétiques (6.1, 6.4), le nombre de premières barres conductrices (10.1) est égal au nombre de secondes barres conductrices (10.2) ou bien le nombre de premières barres conductrices (10.1) est différent du nombre de secondes barres conductrices (10.2).

4. Transformateur de redresseur selon l'une des revendications 1 à 3, dans lequel dans un groupe de barres conductrices ceint par un tore magnétique ou un jeu de tores magnétiques (2.1, 2.2, 2.3), les premières barres conductrices (10.1) sont plus proches dudit tore magnétique ou des tores magnétiques dudit jeu de tores magnétiques (2.1, 2.2, 2.3) que la ou chaque seconde barre conductrice (10.2).

5. Transformateur de redresseur selon l'une des revendications 1 à 4, dans lequel, dans un groupe de barres conductrices ceint par un tore magnétique ou un jeu de tores magnétiques (2.1, 2.2, 2.3), les secondes barres conductrices (10.2) ceintes par ledit tore magnétique ou ledit jeu de tores magnétiques sont plus proches dudit tore magnétique ou des tores magnétiques dudit jeu de tores magnétiques que la ou chaque première barre conductrice (10.1).

6. Transformateur de redresseur selon l'une des revendications 1 à 5, dans lequel une première barre conductrice (10.1) ou une seconde barre conductrice (10.2) d'un groupe est intercalée entre deux secondes barres conductrices (10.2) ou deux premières barres conductrices (10.1) du groupe.

7. Transformateur de redresseur selon l'une des revendications 1 à 6, dans lequel deux premières barres conductrices (10.1) ou deux secondes barres conductrices (10.2) d'un même transducteur magnétique (6.1) sont ceintes par des tores magnétiques ou des jeux de tores magnétiques distincts (2.1, 2.2).

8. Transformateur de redresseur selon l'une des revendications précédentes, dans lequel les enroulements (5.1, 5.2, 5.3) du secondaire au nombre de trois sont montés en triangle ou en étoile.

9. Transformateur de redresseur selon l'une des revendications précédentes, dans lequel la ou chaque première barre conductrice (10.1) et la ou chaque seconde barre conductrice (10.2) sont agencées sensiblement verticalement dans la cuve (8).

10. Transformateur de redresseur selon l'une des revendications 1 à 8, dans lequel la ou chaque première barres conductrice (10.1) et la ou chaque seconde barre conductrices (10.2) sont agencées sensiblement horizontalement dans la cuve (8).

11. Transformateur de redresseur selon l'une des revendications précédentes, dans lequel au moins une boucle conductrice de commande (3) entoure le tore magnétique ou tous les tores magnétiques du jeu de tores magnétiques (2.1, 2.2, 2.3).

12. Transformateur de redresseur selon l'une des revendications précédentes, dans lequel au moins une boucle conductrice de prémagnétisation (4) entoure le tore magnétique ou tous les tores magnétiques du jeu de tores magnétiques (2.1, 2.2, 2.3).

**Patentansprüche**

1. Gleichrichtertransformator, der in einem Kessel (8) mindestens eine Primärseite (9), mindestens eine Sekundärseite (5) mit Phasenwicklungen (5.1, 5.2, 5.3), ein Paar Magnetwandler (6.1, 6.4) pro Phasenwicklung umfasst, wobei einer der Wandler (6.1) eine oder mehrere erste Sammelschienen (10.1) und der andere eine oder mehrere zweite Sammelschienen (10.2) umfasst, wobei die ersten und zweiten Sammelschienen des Wandlerpaares alle an einem Ende mit einer gleichen Phasenwicklung (5.1, 5.2, 5.3) verbunden sind, wobei die oder jede erste Sammelschiene (10.1) an einem anderen Ende mit einer einzigen positiven Ausgangsverbindungsklemme (2w+) verbunden ist, die mit einem positiven Arm (7.12) des Gleichrichters (7) verbunden werden soll, wobei die oder jede zweite Sammelschiene (10.2) an einem anderen Ende mit einer einzigen negativen Ausgangsverbindungsklemme (2w-) verbunden ist, die mit einem negativen Arm (7.11) des Gleichrichters verbunden werden soll, **dadurch gekennzeichnet, dass** alle Sammelschienen (10.1, 10.2) des Magnetwandlerpaares (6.1, 6.4) eine oder mehrere Gruppen bilden, wobei jede Gruppe von einem Magnetkern oder einem Satz von Magnetkernen (2.1, 2.2, 2.3) umgeben ist und eine oder mehrere erste Sammelschienen und eine oder mehrere zweite Sammelschienen umfasst, so dass, wenn die Ausgangsverbindungsklemmen kurzgeschlossen sind und der Transformator über seine Primärseite mit Wechselstrom gespeist wird, der durch die erste(n) Sammelschiene(n) einer Gruppe fließende Strom und der durch die zweite(n) Sammelschiene(n) derselben Gruppe fließende Strom entgegengesetzte Richtungen aufweisen, wobei der Strom oder die Summe der Ströme in einer Richtung im Wesentlichen gleich dem Strom oder der Summe der Ströme in der anderen Richtung ist.

2. Gleichrichtertransformator nach Anspruch 1, wobei bei Vorhandensein von mehreren ersten Sammelschienen (10.1) und/oder mehreren zweiten Sammelschienen (10.2) im Magnetwandlerpaar (6.1, 6.2, 6.3, 6.4, 6.5, 6.6) die ersten Sammelschienen (10.1) parallel geschaltet sind und/oder die zweiten Sammelschienen (10.2) parallel geschaltet sind.

3. Gleichrichtertransformator nach einem der Ansprüche 1 oder 2, wobei in dem Magnetwandlerpaar (6.1, 6.4) die Anzahl der ersten Sammelschienen (10.1) gleich der Anzahl der zweiten Sammelschienen (10.2) ist oder die Anzahl der ersten Sammelschienen (10.1) von der Anzahl der zweiten Sammelschienen (10.2) abweicht.

4. Gleichrichtertransformator nach einem der Ansprüche 1 bis 3, wobei in einer Gruppe von Sammelschienen, die von einem Magnetkern oder einem Satz von Magnetkernen (2.1, 2.2, 2.3) umgeben sind, die ersten Sammelschienen (10.1) näher am Magnetkern oder den Magnetkernen des Magnetkernsatzes (2.1, 2.2, 2.3) liegen als die oder jede zweite Sammelschiene (10.2).

5. Gleichrichtertransformator nach einem der Ansprüche 1 bis 4, wobei in einer Gruppe von Sammelschienen, die von einem Magnetkern oder einem Satz von Magnetkernen (2.1, 2.2, 2.3) umgeben sind, die zweiten Sammelschienen (10.2), die von dem Magnetkern oder dem Satz von Magnetkernen umgeben sind, näher am Magnetkern oder den Magnetkernen des Magnetkernsatzes liegen als die oder jede erste Sammelschiene (10.1).

6. Gleichrichtertransformator nach einem der Ansprüche 1 bis 5, wobei eine erste Sammelschiene (10.1) oder eine zweite Sammelschiene (10.2) einer Gruppe zwischen zwei zweiten Sammelschienen (10.2) oder zwei ersten Sammelschienen (10.1) der Gruppe eingefügt ist.

7. Gleichrichtertransformator nach einem der Ansprüche 1 bis 6, wobei zwei erste Sammelschienen (10.1) oder zwei zweite Sammelschienen (10.2) eines selben Magnetwandlers (6.1) von separaten Magnetkernen oder Sätzen von verschiedenen Magnetkernen (2.1, 2.2) umgeben sind.

8. Gleichrichtertransformator nach einem der vorstehenden Ansprüche, wobei die drei Wicklungen (5.1, 5.2, 5.3) der Sekundärseite in Dreiecks- oder Sternform geschaltet sind.

9. Gleichrichtertransformator nach einem der vorstehenden Ansprüche, wobei die oder jede erste Sammelschiene (10.1) und die oder jede zweite Sammelschiene (10.2) im Wesentlichen vertikal im Kessel (8) angeordnet sind.

10. Gleichrichtertransformator nach einem der Ansprüche 1 bis 8, wobei die oder jede erste Sammelschiene (10.1) und die oder jede zweite Sammelschiene (10.2) im Wesentlichen horizontal im Kessel (8) angeordnet sind.

11. Gleichrichtertransformator nach einem der vorstehenden Ansprüche, wobei mindestens eine leitende Regelschleife (3) den Magnetkern oder alle Magnetkerne des Magnetkernsatzes (2.1, 2.2, 2.3) umgibt.

12. Gleichrichtertransformator nach einem der vorstehenden Ansprüche, wobei mindestens eine leitende Vormagnetisierungsschleife (4) den Magnetkern oder alle Magnetkerne des Magnetkernsatzes (2.1, 2.2, 2.3) umgibt.

## Claims

1. Rectifier transformer comprising at least one primary (9), at least one secondary (5) with phase windings (5.1, 5.2, 5.3), a pair of magnetic transducers (6.1, 6.4) per phase winding, all in a tank (8), one of the transducers (6.1) comprising one or several first conducting bars (10.1) and the other comprising one or several second conducting bars (10.2), the first and second conducting bars of the pair of transducers all being connected at one end to the same phase winding (5.1, 5.2, 5.3), the or each first conducting bar (10.1) being connected at another end to a single positive output connection terminal (2w+) that will be connected to a positive arm (7.12) of the rectifier (7), the or each second conducting bar (10.2) being connected by another end to a single negative output connection terminal (2w-) that will be connected to a negative arm (7.11) of the rectifier, **characterised in that** all conducting bars (10.1, 10.2) of the pair of magnetic transducers (6.1, 6.4) form one or several groups, each group being surrounded by a magnetic torus or a set of magnetic toruses (2.1, 2.2, 2.3) and comprising one or several first conducting bars and one or several second conducting bars such that when the output connection terminals are short circuited and the transformer is powered by alternating current through its primary, the current that passes through the first conducting bar(s) of a group and the current that passes through the second conducting bar(s) of the same group are in opposite directions, the current or the sum of the currents in one direction being approximately equal to the current or the sum of the currents in the other direction.

2. Rectifier transformer according to claim 1 wherein, when there are several first conducting bars (10.1) and/or several second conducting bars (10.2) in the pair of magnetic transducers (6.1, 6.2, 6.3, 6.4, 6.5, 6.6), the first conducting bars (10.1) are mounted in parallel and/or the second conducting bars (10.2) are mounted in parallel.

3. Rectifier transformer according to either claim 1 or 2, wherein in the pair of magnetic transducers (6.1, 6.4), the number of first conducting bars (10.1) is equal to the number of second conducting bars (10.2) or the number of first conducting bars (10.1) is different from the number of second conducting bars (10.2).

4. Rectifier transformer according to one of claims 1 to 3, wherein in a group of conducting bars surrounded by a magnetic torus or a set of magnetic toruses (2.1, 2.2, 2.3), the first conducting bars (10.1) are closer to said magnetic torus or magnetic toruses in said set of magnetic toruses (2.1, 2.2, 2.3) than the or each second conducting bar (10.2).

5. Rectifier transformer according to one of claims 1 to 4, wherein in a group of conducting bars surrounded by a magnetic torus or a set of magnetic toruses (2.1, 2.2, 2.3), the second conducting bars (10.2) surrounded by said magnetic torus or said set of magnetic toruses are closer to said magnetic torus or magnetic toruses in said set of magnetic toruses than the or each first conducting bar (10.1).

6. Rectifier transformer according to one of claims 1 to 5, wherein a first conducting bar (10.1) or a second conducting bar (10.2) in a group is intercalated between two second conducting bars (10.2) or two first conducting bars (10.1) in the group.

7. Rectifier transformer according to one of claims 1 to 6, wherein two first conducting bars (10.1) or two second conducting bars (10.2) of the same magnetic transducer (6.1) are surrounded by distinct magnetic toruses or sets of magnetic toruses (2.1, 2.2).

8. Rectifier transformer according to one of the preceding claims, wherein the three windings (5.1, 5.2, 5.3) of the secondary are mounted in delta or in star.

9. Rectifier transformer according to one of the preceding claims, wherein the or each first conducting bar (10.1) and the or each second conducting bar (10.2) are arranged approximately vertically in the tank (8).

10. Rectifier transformer according to one of claims 1 to 8, wherein the or each first conducting bar (10.1) and the or each second conducting bar (10.2) are arranged approximately horizontally in the tank (8).

11. Rectifier transformer according to one of the preceding claims, wherein the at least one conducting control loop (3) surrounds the magnetic torus or all magnetic toruses in the set of magnetic toruses (2.1, 2.2, 2.3).

12. Rectifier transformer according to one of the preceding claims, wherein the at least one conducting premagnetisation loop (4) surrounds the magnetic torus or all magnetic toruses in the set of magnetic toruses (2.1, 2.2, 2.3).

FIG. 1A

FIG. 1B

EP 2 659 495 B1

FIG. 1C

FIG. 1D

14

2w+  2v+  2u+

2w-  2v-  2u-

8.1

# FIG. 1E

$I_{2u+}(t)$

Id

0

p/3

2p/3

p

4p/3

5p/3

2p

7p/3

8p/3

ωt

$I_{2u-}(t)$

0

-Id

p/3

2p/3

4p/3

p

5p/3

2p

7p/3

8p/3

ωt

# FIG. 1F

FIG. 2A

FIG. 2B

# FIG. 2C

# FIG. 2D

# FIG. 2E

FIG. 2F

FIG. 2G

FIG. 3A

FIG. 3B

FIG. 3C

EP 2 659 495 B1

FIG. 3D

FIG. 3E

20

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3085188 A